# EUROPEAN PATENT APPLICATION

(11) **EP 4 617 054 A1**
(43) Date of publication of application: **17.09.2025**
(21) Application number: 22964637.7
(22) Date of filing: 09.11.2022
(51) Int. Cl.: B32B 17/10, B32B 27/36, B32B 27/08

(54) **REINFORCED LAMINATED GLASS WITH A REINFORCED BEVEL AND METHOD FOR MANUFACTURING SAME**

(71) Applicant: Fontela, Alberto Óscar, Ciudad de México, 05100 (MX)
(72) Inventor: Fontela, Alberto Óscar, Ciudad de México, 05100 (MX)
(74) Representative: Tiburzi, Andrea
(86) International application number: PCT/MX2022/050114
(87) International publication number: WO 2024/101978

(57) **Abstract**

The present invention relates to a reinforced laminated glass (1) comprising a base glass (2), a multilayer reinforcing sheet (3), and a reinforced bevel (4) formed in at least a portion of the thickness of the multilayer reinforcing sheet (3), as well as a method for manufacturing said reinforced laminated glass (1).

## Description

### FIELD OF THE INVENTION

The invention relates to the field of materials technology, specifically to a reinforced laminated glass with a reinforced bevel and the method for producing the same. The reinforced laminated glass with a reinforced bevel of the present invention is used in industries related to protective and security glasses, particularly in the field of the automotive industry.

### BACKGROUND OF THE INVENTION

Reinforced laminated glasses have been used in the transportation and construction industries for a long time. Such glasses typically comprise a combination of two or more inorganic or organic glasses bonded together by one or more intermediate films, providing security against impacts due to the intermediate film absorbing and dissipating the energy of said impact.

Therefore, one of the main applications of reinforced glasses is in the automotive sector, particularly when it is required to provide greater security to vehicle users, mainly against impacts from unexpected objects and even bullet impacts. Under this premise, it is important to consider that such objects may come from different directions and strike different areas of the reinforced laminated glass, making it desirable for the glass to be fully protected, which is not easy to achieve in practice, especially at the edges, as will be described later.

To facilitate installation, reinforced glasses for automotive vehicles traditionally lack any type of reinforcement or shielding at their edges. In recent years, technologies have been developed aimed at manufacturing a reinforced laminated glass that provides greater security to vehicle users and which provides protection across its entire surface.

The German patent application DE4142416A1 refers to a vehicle window made of reinforced laminated glass supported by a vehicle window frame, wherein the window comprises a steel plate reinforcing element arranged on the lateral end surface of the window, preventing the penetration of a bullet through the window frame into the vehicle interior. However, this patent application is silent about the composition or modifications to the reinforced laminated glass to achieve protection in the area corresponding to the window frame.

The European patent EP 0 915 315 B1 protects a bulletproof glass window, preferably used in an automotive vehicle. This invention involves the use of several glass sheets, bonded together by an intermediate polyvinyl butyral (PVB) film, wherein the glass layer facing towards the exterior of the vehicle is larger than the other glass sheets, forming a stepped projection or portion, over which a metal insert, preferably steel, is permanently bonded to the glass surface using polyurethane, in such a manner that the metal insert provides greater protection to vehicle users against bullet impacts occurring in the marginal area of the bulletproof glass window.

The U.S. patent US 9,945,641 B2 relates to a bulletproof glass panel with a reinforced edge, preferably for use in an automotive vehicle, wherein the bulletproof glass panel is formed by a plurality of layers of glass, ceramic, or plastic material, such as a composite of layers bonded together, and having an edge reinforcement extending around the periphery of the bulletproof glass panel, having at least two mutually engaged or loosely coupled reinforcing members to form the edge reinforcement, wherein said reinforcing members may be made of stainless steel or aluminum oxynitride (AlON).

The European patent EP1800086B1 refers to a reinforced glass composition comprising three sets of glass layers and a perimeter reinforcement, preferably made of steel, wherein the first set comprises glass layers bonded together with polymeric adhesive layers; the second set comprises energy-absorbing and adhesive layers; and the third set comprises layers of materials bonded together and a sealing layer. Said third set is adhered to the first and second sets and to the perimeter reinforcement; the arrangement of polymeric materials in the third set allows that in the event of a bullet impact near the edge of the perimeter reinforcement, to deform said third set in a controlled manner, retaining glass shards or traces and containing the residual energy of the projectile.

As can be appreciated from the prior art documents mentioned above, providing a reinforced glass for an automotive vehicle window, whose surface, including the edges that fit within the window frame, is fully protected, involves the implementation of an additional material beyond those forming the reinforced laminated glass, which covers the periphery of the vehicle window and is mainly made of steel.

In this context, implementing multiple glass layers to reinforce a vehicle window generally involves manufacturing an entirely new glass, removing or discarding the original one. Additionally, using steel inserts to reinforce the window edges increases the weight of the glass and, consequently, fuel consumption.

Likewise, implementing a metallic insert or additional material to protect the edges of a vehicle window involves structural modifications to the window frame for its installation, increasing both manufacturing costs and delivery times.

In view of the subject matter disclosed in the prior art, there is a need to provide a reinforced laminated glass for use as security glass in a vehicle window that offers high impact resistance across its entire surface, including the edges that fit into the vehicle window frame, and whose manufacturing cost is lower compared to reinforced laminated glasses with reinforced edges that include additional perimeter protection, as known in the prior art.

### BRIEF DESCRIPTION OF THE INVENTION

In view of the disadvantages of the prior art, the objective of the present invention is to provide a reinforced laminated glass with a reinforced bevel for use as security glass for a vehicle window, offering high impact resistance across its entire surface, including the edges that fit into the vehicle window frame, without modifying its structure and with a lower manufacturing cost than that of reinforced laminated glasses with reinforced edges known in the prior art that include additional perimeter protection using additional materials.

To achieve the objective set forth in the present invention, a reinforced laminated glass for a vehicle window is provided, which, in its most general configuration, comprises:
a base glass having an inner surface and an outer surface; and
a multilayer reinforcing sheet having an inner surface and an outer surface and comprising at least one adhesive film and at least one plastic sheet, said multilayer reinforcing sheet is disposed on the inner surface of the base glass, wherein the at least one adhesive film bonds the base glass to the multilayer reinforcing sheet and the layers of the multilayer reinforcing sheet to each other;
at least a portion of the contour of the reinforced laminated glass comprises:
   a reinforced bevel formed in at least a portion of the thickness of the multilayer reinforcing sheet, such that the reinforced laminated glass fits into each side of the frame of the vehicle window when the reinforced laminated glass closes said window.

The above is achieved without the need to change or modify the structure of the window frame.

The present invention also relates to a method for manufacturing a reinforced laminated glass with a reinforced bevel as described above.

The method for manufacturing a reinforced laminated glass with a reinforced bevel for a vehicle window comprises the following steps:
- providing a base glass having an inner surface and an outer surface;
- providing a multilayer reinforcing sheet having an inner surface and an outer surface and comprising at least one adhesive film and at least one plastic sheet;
- laminating the base glass with the multilayer reinforcing sheet placed on the inner surface of said base glass to obtain a reinforced laminated glass, wherein during lamination, the at least one adhesive film bonds the base glass to the multilayer reinforcing sheet and the layers of the multilayer reinforcing sheet to each other;
- wherein a reinforced bevel is formed in at least a portion of the thickness of the multilayer reinforcing sheet, such that the reinforced laminated glass fits into each side of the frame of the vehicle window when the reinforced laminated glass closes said window.

The reinforced bevel may be formed before, during, or after the lamination stage of the base glass with the multilayer reinforcing sheet.

### BRIEF DESCRIPTION OF THE FIGURES

Figure 1 illustrates a cross-sectional side view of a reinforced laminated glass for a vehicle window known in the prior art.
Figure 2 illustrates a cross-sectional side view of a reinforced laminated glass for a vehicle window according to an embodiment of the present invention without reinforced bevel.
Figure 3 illustrates a cross-sectional side view of a reinforced laminated glass with reinforced bevel for a vehicle window according to another embodiment of the present invention.
Figure 4 illustrates a cross-sectional side view of a preferred embodiment of a reinforced laminated glass with reinforced bevel for a vehicle window according to the present invention.
Figure 5 illustrates a cross-sectional view of an embodiment of a reinforced laminated glass with reinforced bevel for a vehicle window according to the present invention mounted in a frame of a vehicle window.

### DETAILED DESCRIPTION OF THE INVENTION

Hereinafter, the technical features of the present invention will be described with reference to the attached figures.

In the context of the present invention, the term "inner" refers to the side of the glass that, once installed in a vehicle window, will face the interior of the vehicle cabin; while the term "outer" refers to the side of the glass that, once installed in the vehicle, will face the exterior. However, these orientations are only references to aid in understanding the present invention and are not intended to limit it.

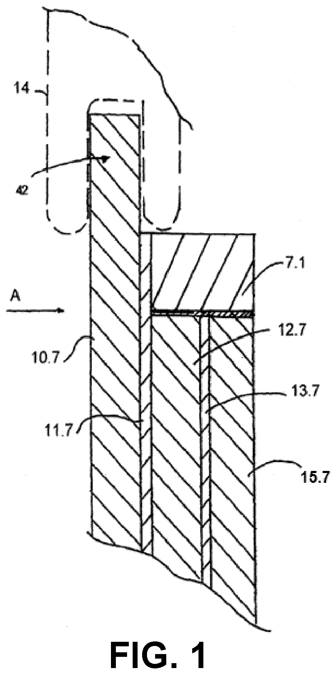

Figure 1 shows a cross-sectional side view of a reinforced laminated glass (A) for a vehicle window with an edge reinforcement known in the prior art. The reinforced laminated glass (A) comprises a plurality of glass panels (10.7, 12.7, 15.7) bonded by polyvinyl butyral and/or polyurethane films (11.7, 13.7), the glass panel (10.7) has an unreinforced projection (42) that extends beyond the ends of the panels (12.7) and (15.7); said unreinforced projection (42) fits into a vehicle door window frame (14). The reinforced laminated glass (A) includes an edge reinforcement (7.1) aimed at protecting the contour of the reinforced laminated glass (A) and preventing damage that could occur to the glass due to temperature fluctuations.

As can be appreciated from Figure 1, reinforced laminated glasses for vehicle window as known in the prior art do not include a reinforced zone in the projection (42) that fits into the vehicle door window frame (14), which does not provide full protection to the reinforced glass (A). Likewise, when additional protection is provided to said projection (42), such as the edge reinforcement (7.1), it is common to need to modify the structure of the vehicle window frame (14), increasing both delivery times and manufacturing costs.

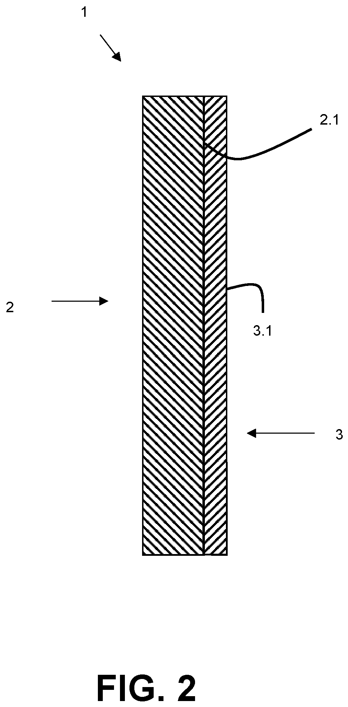

In Figure 2, a cross-sectional side view of a reinforced laminated glass (1) for a vehicle window (not shown) without a reinforced bevel is shown according to the present invention, comprising:
- a base glass (2) having an inner surface (2.1) and an outer surface; and
- a multilayer reinforcing sheet (3) having an inner surface (3.1) and an outer surface and comprising at least one adhesive film and at least one plastic sheet, said multilayer reinforcing sheet (3) is disposed on the inner surface (2.1) of the base glass (2).

In this exemplary, non-limiting embodiment, the base glass (2) may be selected from any type of crystal or tempered glass, specifically those used as vehicle door window glasses. In particular, it is the original glass of a vehicle window.

The adhesive films (not illustrated) of the multilayer reinforcing sheet (3) may be preferably, but not limited, to, polyurethane (PU) films, for example, "KRYSTALFLEX^{®} PE399" plastic polyurethane films used in lamination processes with glass and plastic components.

The adhesive films of the multilayer reinforcing sheet (3) may be, for example, preferably but not limited to, polyvinyl butyral (PVB) films, particularly "Trosifol^{®} Clear B500 JR" PVB films.

The plastic sheets (not illustrated) of the multilayer reinforcing sheet (3) may be preferably, but not limited to,polycarbonate films, for example, "LEXAN^{™} 9034" polycarbonate films.

The plastic sheets of the multilayer reinforcing sheet (3) may be, for example, preferably but not limited to, crystallized polyethylene terephthalate (C-PET) films of the "Trosifol^{®} Spallshield^{®} cPET Clear" brand. In the context of the present invention, C-PET refers to a composite structure of two films, one of polyethylene terephthalate (PET) and another harder film that is durable and chemically resistant.

The multilayer reinforcing sheet (3) has a thickness ranging from 2.5 mm to 20 mm. To form the multilayer reinforcing sheet (3), as many adhesive films and plastic sheets as necessary may be successively arranged and combined, depending on the desired impact resistance of the reinforced laminated glass (1).

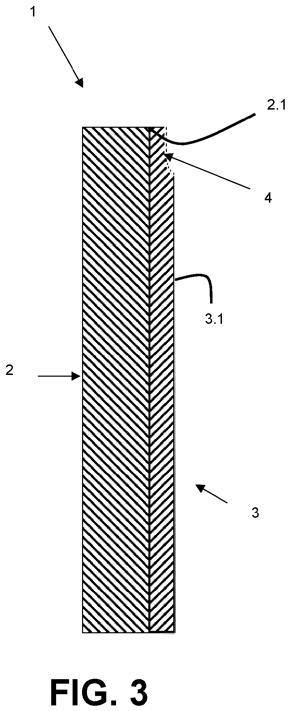

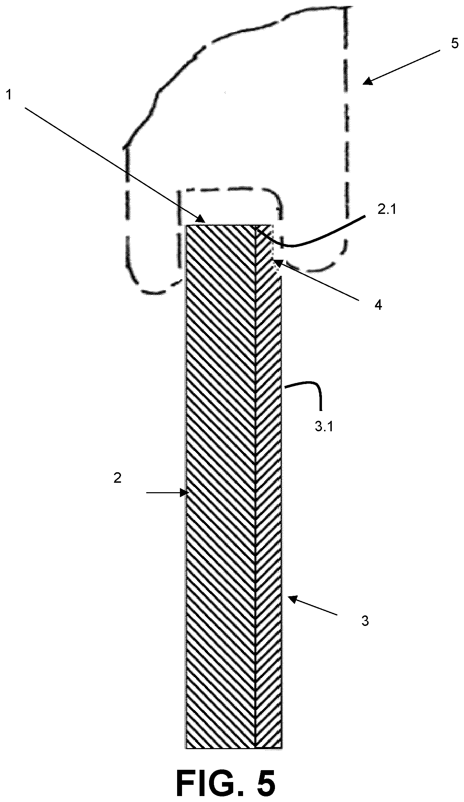

In Figure 3, a cross-sectional side view of an embodiment of a reinforced laminated glass (1) for a vehicle window is shown, wherein at least a portion of its contour comprises a reinforced bevel (4) formed in the multilayer reinforcing sheet (3), which may be created by roughing out at least a portion of the thickness of the multilayer reinforcing sheet (3) so that the reinforced laminated glass (1) fits into each side of the frame (5) of the vehicle window when the reinforced laminated glass (1) closes said window (see Figure 5).

Continuing with the embodiment shown in Figure 3, the roughing out that forms the reinforced bevel (4) does not encompass the entire thickness of the multilayer reinforcing sheet (3), i.e., the roughing out is formed from the inner surface (3.1) of the multilayer reinforcing sheet (3) to a determined point of the thickness of the multilayer reinforcing sheet (3), but without reaching the inner surface (2.1) of the base glass (2). **The** point to which the multilayer reinforcing sheet (3) is ground is selected so that the reinforced laminated glass (1) fits into each side of the vehicle window frame (5) when the reinforced laminated glass (1) closes said window. Likewise, it can be observed that the roughing out does not necessarily result in a straight reinforced bevel (4), but various configurations are possible, such as, but not limited to, concave configurations relative to the inner surface (3.1) of the multilayer reinforcing sheet (3), or rounded or stepped configurations. A person skilled in the art will understand that the protection in the sections with the reinforced bevel (4) of the reinforced laminated glass (1) is provided by the unground portion of the multilayer reinforcing sheet (3).

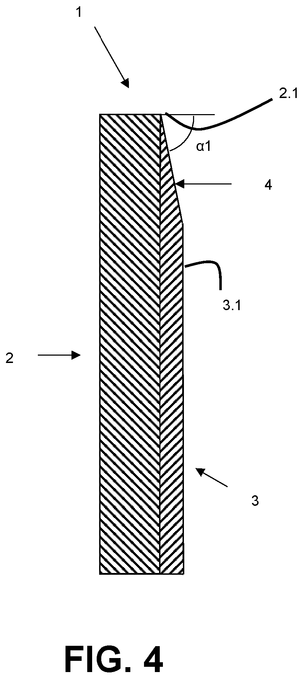

Figure 4 illustrates an exemplary embodiment, wherein the reinforced bevel (4) of the reinforced laminated glass (1) for a vehicle window is formed in the multilayer reinforcing sheet (3) by a roughing out at an angle α1 defined by the edge of the inner surface (2.1) of the base glass (2) and the inner surface (3.1) of the multilayer reinforcing sheet (3). In this embodiment, the roughing out is formed in a straight line up to the level of the edge of the inner surface (2.1) of the base glass (2).

Figure 5 illustrates the reinforced laminated glass (1) with a reinforced bevel (4) of Figure 3 mounted in a frame (5) of a vehicle window, wherein the structure of the frame (5) of the window undergoes no modification to allow the mounting of the reinforced laminated glass (1).

**The** specific arrangement of the reinforced laminated glass (1) with a reinforced bevel (4) illustrated in Figure 3 is advantageous over the known prior art because the reinforced bevel (4) provides impact reinforcement to the area that fits into the frame (5) of the vehicle window, without the need to modify the structure of the frame (5) of the window or provide any additional protective element, such as steel reinforcements or similar known reinforcements, although a person skilled in the art will understand that the present invention may be used in conjunction with such other reinforcements.

Additionally, advantageously, the base glass (2) according to the present invention is preferably the original glass of the automotive vehicle, i.e., it is not necessary to manufacture an entirely new reinforced laminated glass (1) or modify the structure of the frame (5) of the vehicle window, instead, the multilayer reinforcing sheet (3) is laminated onto the original glass of any type of automotive vehicle, significantly reducing both delivery times and manufacturing costs, thereby providing a reinforced laminated glass (1) for a vehicle window that is resistant to blows and bullet impacts across its entire area, including the edges that fit into the frame (5) of the vehicle window, without significantly increasing the total weight of the glass.

As previously mentioned, the present invention also relates to a method for producing the reinforced laminated glass (1) with a reinforced bevel (4) as described above. This method comprises, in its most general description, the following steps, not necessarily limited to the order in which they are stated:
a) providing a base glass (2) having an inner surface (2.1) and an outer surface;
b) providing a multilayer reinforcing sheet (3) having an inner surface (3.1) and an outer surface, comprising at least one adhesive film and at least one plastic sheet;
c) laminating the base glass (2) with the multilayer reinforcing sheet (3) placed on the inner surface (2.1) of said base glass (2) to obtain a reinforced laminated glass (1), wherein during lamination, the at least one adhesive film bonds the base glass (2) to the multilayer reinforcing sheet (3) and the layers of the multilayer reinforcing sheet (3) to each other;
d) wherein a reinforced bevel (4) is formed in at least a portion of the thickness of the multilayer reinforcing sheet (3), such that the reinforced laminated glass (1) fits into each side of the frame (5) of the vehicle window when the reinforced laminated glass (1) closes said window.

For example, to carry out step a) the base glass (2) is removed from the vehicle window and placed on a support to remove any stickers, security films, or tint films from the glass; the base glass (2) is cleaned with a lint-free towel, and a second cleaning is formed with ethyl alcohol to ensure its transparency.

To carry out step b), a combination of adhesive films and plastic sheets is arranged successively between each other. This combination of films is selected based on the desired resistance of the reinforced laminated glass (1). The adhesive films are provided to bond the base glass (2) to the multilayer reinforcing sheet (3) and the layers of the multilayer reinforcing sheet (3) to each other.

The lamination step c) may be formed according to procedures known in the prior art and may comprise the following steps:
- placing the base glass (2) with the multilayer reinforcing sheet (3) on the inner surface (2.1) of the base glass (2) and the at least one adhesive film into a vacuum bag and performing a vacuum operation;
- placing the vacuum bag containing the base glass (2) with the multilayer reinforcing sheet (3) and the at least one adhesive film into an autoclave and performing a pre-lamination operation; this step may be carried out by pressurizing the autoclave to a pressure between 4 and 6 kg/cm² (392.266 and 588.399 kPa), turning on its electric resistances until reaching a temperature between 85°C and 100°C (358.15 K and 373.15 K) with a dwell time of 25 to 120 minutes after reaching said pressure and temperature values;
- removing the pre-laminated glass from the vacuum bag and performing a lamination operation in the autoclave to obtain a reinforced laminated glass (1); this operation may be carried out by pressurizing the autoclave to a pressure between 7 and 14 kg/cm² (686.466 and 1,372.93 kPa), turning on the autoclave resistances when a pressure between 2 and 3 kg/cm² (196.133 and 294.2 kPa) is reached. The autoclave resistances are turned off when a temperature between 110°C and 120°C (383.15 K and 393.15 K) is reached while maintaining the pressure; the pressure is released once the temperature drops to between 81°C and 74°C (354.15 K and 347.15 K), and the autoclave is opened and the reinforced laminated glass (1) is removed when the temperature drops to 73°C (346.15 K).

In one embodiment, step d) is carried out by roughing out at least a portion of the thickness of the multilayer reinforcing sheet (3). This operation may be performed before step c), i.e., before the lamination of the base glass (2) with the multilayer reinforcing sheet (3) and the at least one adhesive film, wherein said roughing out is formed solely on the multilayer reinforcing sheet (3) provided in step b).

In another embodiment, the roughing out of at least a portion of the thickness of the multilayer reinforcing sheet (3) is formed during the lamination step c), specifically after pre-lamination, wherein said roughing out is formed on the multilayer reinforcing sheet (3) placed on the inner surface (2.1) of the base glass (2).

In another preferred embodiment, the roughing out of at least a portion of the thickness of the multilayer reinforcing sheet (3) is formed after the lamination step c).

Likewise, the roughing out may be formed by any machining process, including, by way of example and not limitation: rough grinding, using an automatic edging machine, or cutting with a Computer Numerical Control (CNC) machine.

The reinforced laminated glasses (1) with a reinforced bevel (4) of the present invention were subjected to a "Multiple Concentrated Impact Resistance" test in accordance with NOM-146-SCFI-2015, which establishes minimum security and/or containment specifications that a finished glass product must comply with to reduce the risk of injury to people in contact with it caused by the glass breaking due to human impact, projected objects, or other external sources. The test involved striking each reinforced laminated glass (1) three times with a 4.1 kg steel mass dropped from a height of 9 meters. The results showed that the mass did not penetrate the reinforced laminated glass (1) in any of the three impacts in any case.

### Example

In a non-limiting example of the present invention, a reinforced laminated glass (1) for a vehicle window was manufactured according to the present invention, wherein the base glass (2) is a vehicle door window glass, which, once removed from the door window frame (5), is cleaned with a lint-free towel, followed by a second cleaning with ethyl alcohol to ensure its transparency.

Two polyurethane films of the "KRYSTALFLEX^{®} PE399" brand, each 0.3 mm thick, one polycarbonate sheet of the "LEXAN^{™} 9034" brand, 1.5 mm thick, and one C-PET film of the "Trosifol^{®} Spallshield^{®} CPET Clear" brand, 0.18 mm thick, are cut to cover the entire surface of the base glass (2).

Subsequently, the first polyurethane film, the polycarbonate sheet, the second polyurethane film, and the C-PET film are successively placed on the base glass (2), forming a multilayer reinforcing sheet (3).

Once the multilayer reinforcing sheet (3) is placed on the base glass (2) so that the inner surface (2.1) of the base glass (2) contacts the first polyurethane film, they are placed in a vacuum bag, and a vacuum operation is formed. Then, the base glass (2) with the multilayer reinforcing sheet (3) and the adhesive films are introduced into an autoclave for pre-lamination.

The autoclave is pressurized to a pressure of 6 kg/cm² (588.399 kPa); when this pressure is reached, the electric resistances of the autoclave are turned on until a temperature of 94°C (367.15 K) is reached; once these temperature and pressure values are reached, the base glass (2) and its components are kept in the autoclave for 30 minutes; afterward, the autoclave is cooled, and the pre-laminated glass is removed from the vacuum bag.

The pre-laminated glass is reintroduced into the autoclave and pressurized to a pressure of 7.5 kg/cm² (735.499 kPa), while the electric resistances are turned on when the pressure reaches 2 kg/cm² (196.133 kPa); the electric resistances are turned off when a temperature of 120°C (293.15 K) is reached, maintaining the pressure. The autoclave pressure is released when the temperature drops to 78°C (351.15 K), and the autoclave is opened when the temperature decreases to 73°C (346.15 K).

Subsequently, at least a portion of the thickness of the multilayer reinforcing sheet (3) is roughed out to form a reinforced bevel (4) in at least a portion of the thickness of the multilayer reinforcing sheet (3).

Finally, the reinforced laminated glass (1) with a reinforced bevel (4) is mounted in the frame (5) of the window of the side door of the vehicle, as shown in Figure 5, so that each of the sides of the reinforced laminated glass (1) fits in said frame (5) without forcing the frame (5).

**The** resulting product is a reinforced laminated glass (1) with a reinforced bevel (4) that was subjected to a "Multiple Concentrated Impact Resistance" test in accordance with NOM-146-SCFI-2015, achieving a favorable result.

**The** reinforced laminated glass (1) with a reinforced bevel (4) and the process for manufacturing a reinforced laminated glass (1) described in this section correspond to a specific embodiment using the minimum values of thickness, number of sheets, and films. However, the technical advantages of the present invention are still achieved even if the number of sheets and/or films is increased based on the desired impact resistance.

## Claims

1. A reinforced laminated glass (1) for a vehicle window, said reinforced laminated glass (1) comprising:
a base glass (2) having an inner surface (2.1) and an outer surface; and
a multilayer reinforcing sheet (3) having an inner surface (3.1) and an outer surface, comprising at least one adhesive film and at least one plastic sheet, said multilayer reinforcing sheet (3) is disposed on the inner surface (2.1) of the base glass (2), wherein the at least one adhesive film bonds the base glass (2) to the multilayer reinforcing sheet (3) and the layers of the multilayer reinforcing sheet (3) to each other;
the reinforced laminated glass (1) is **characterized in that** at least a portion of its contour comprises:
a reinforced bevel (4) formed in at least a portion of the thickness of the multilayer reinforcing sheet (3) such that the reinforced laminated glass (1) fits into each side of the frame (5) of the vehicle window when the reinforced laminated glass (1) closes said window.

2. The reinforced laminated glass (1) according to claim 1, further **characterized in that** the reinforced bevel (4) is formed at an angle α1 defined by the edge of the inner surface (2.1) of the base glass (2) and the inner surface (3.1) of the multilayer reinforcing sheet (3).

3. The reinforced laminated glass (1) according to any of the preceding claims, further **characterized in that** the at least one adhesive film is selected from a polyurethane (PU) film or a polyvinyl butyral (PVB) film.

4. The reinforced laminated glass (1) according to any of the preceding claims, further **characterized in that** the at least one plastic sheet is selected from a polycarbonate sheet or a crystallized polyethylene terephthalate (C-PET) sheet.

5. The reinforced laminated glass (1) according to any of the preceding claims, further **characterized in that** the multilayer reinforcing sheet (3) has a thickness ranging from 2.5 mm to 20 mm.

6. A method for manufacturing a reinforced laminated glass (1) for a vehicle window as claimed in any of claims 1 to 5, comprising the steps of:
- providing a base glass (2) having an inner surface (2.1) and an outer surface;
- providing a multilayer reinforcing sheet (3) having an inner surface (3.1) and an outer surface, and comprising at least one adhesive film and at least one plastic sheet;
- laminating the base glass (2) with the multilayer reinforcing sheet (3) placed on the inner surface (2.1) to obtain the reinforced laminated glass (1), wherein during lamination, the at least one adhesive film bonds the base glass (2) to the multilayer reinforcing sheet (3) and the layers of the multilayer reinforcing sheet (3) to each other;
the method is **characterized in that** a reinforced bevel (4) is formed in at least a portion of the thickness of the multilayer reinforcing sheet (3), such that the reinforced laminated glass (1) fits into each side of the frame (5) of the vehicle window when the reinforced laminated glass (1) closes said window.

7. The method according to claim 6, further **characterized in that** the reinforced bevel (4) is formed before, during, or after the lamination stage of the base glass (2) with the multilayer reinforcing sheet (3).

8. The method according to any of claims 6 and 7, further **characterized in that** the reinforced bevel (4) is formed by rough grinding, bevelling with an automatic edging machine, or cutting with a Computer Numerical Control (CNC) machine.
